# EUROPEAN PATENT SPECIFICATION

(11) **EP 0 737 286 B1**
(45) Date of publication and mention of the grant of the patent: **19.05.1999**
(21) Application number: 95904399.3
(22) Date of filing: 21.12.1994
(51) Int. Cl.: F16K 31/64, G05D 23/12

(54) **THERMOSTAT TOP PART FOR RADIATOR VALVES**
THERMOSTAT KOPFTEIL EINES HEIZKÖRPERVENTILS
PARTIE SUPERIEURE THERMOSTAT D'UN ROBINET DE RADIATEUR

(30) Priority: 28.12.1993 DE 4344773
(43) Date of publication of application: 16.10.1996
(73) Proprietor: Danfoss A/S, 6430 Nordborg (DK)
(72) Inventor: NIELSEN, Kuno, DK-8600 Silkeborg (DK); MAROTI, Stefan, Paul, DK-8600 Silkeborg (DK); MARKVART, Arne, DK-8600 Silkeborg (DK); FREDERIKSEN, Bjarne, DK-8600 Silkeborg (DK)
(74) Representative: Nissen, Georg
(86) International application number: DK9400478
(87) International publication number: WO9518325

(56) References cited:
- EP-A- 0 504 582
- WO-A-94/29778
- DE-A- 2 220 340

## Description

The invention relates to a thermostat top part for radiator valves, which by means of an adapter can be used for at least two types of valve housing, having a fixing means for mounting it on the valve housing and a valve stem that is axially adjustable by a temperature-dependent working element for displacing a tappet in the valve housing loaded by a restoring spring.

Thermostatic radiator valves consist of a valve housing and a thermostat top part which is mounted directly on the valve housing by means of a suitable fixing means. The top part contains a working element filled with a temperature-dependent expanding substance; the working element uses a valve stem to adjust a tappet projecting from the valve housing, and consequently the closure member of the valve. Suitable expanding substances are solid, paste-like or fluid expanding media or even a vapour or liquid-vapour filling in association with a set-point spring. Because the top part is matched exactly to the valve housing, calibration of the set value of the top part can be carried out at the factory.

A thermostat top part of the kind according to the preamble is also known, which fits one type of valve housing and can be adapted to a further type of valve housing by means of an adapter, which is arranged between the fixing means of the top part and the valve housing. The adapter is an accessory which is easily lost. It also impairs the strength of the connection between the top part and the valve housing.

According to DE-AS 22 20 340, in 1972 the Applicant proposed a thermostat top part in which a transversely displaceable slider was arranged between the valve stem of the top part and the tappet of the valve housing. Using the slider, the effective length of the valve stem could be changed by a predetermined amount. In this manner, adjustment of the set point by a predetermined amount could be performed more quickly and simply than when using the conventional method of adjusting the set point by means of a rotary knob. This top part had a fixing means adapted specially to the valve housing, and was suitable only for that one kind of valve housing.

The invention is based on the problem of providing a thermostat top part of the kind described in the introduction which can be used in combination with at least two different types of valve housing, and which is not affected by the difficulties arising previously with the use of an adapter.

This problem is solved according to the invention in that the fixing means is constructed for direct mounting of the top part on the different types of valve housing, of which there are at least two, and the adapter is formed by two stem parts which are displaceable relative to one another and as a result alter the effective length of the valve stem.

The invention is based on the realisation that whenever the fixing means is suitable for direct connection to at least two different types of valve housing, the adapter need only have the function of adapting the effective length of the valve stem in order to make the top part suitable for use with two or more different types of valve housing. Such an adapter can be of relatively small construction and can be housed inside the top part. It can remain permanently in place and is interposed in the force-transmission path each time the top part is used. This provides great security against loss. The adapter need not be visible at all externally. Direct mounting of the top part provides an extremely firm connection to the valve housing. The requirement that the fixing means should be suitable for at least two types of valve housing can be most simply met if these, as is frequently customary, have an external thread of the same diameter for a union nut by which the base of the thermostat top part is held against the end face of the valve housing. The differences in dimension of the types of valve housing are then essentially in the operating mechanism. The fixing means can alternatively be clamped axially or radially in a different manner and work together with clamping faces on the valve housing which do not have to be identical with one another in different types.

The change in length predetermined by adjustment of the stem parts is preferably so dimensioned that the set-point calibration of the top part applies to both types of valve housing. In this manner, the top parts can be calibrated at the factory. This calibration remains the same for all the different types of valve housing that can be connected to the top part.

It is advisable for one stem part to have axially offset bearing surfaces joined to one another by way of a ramp, which surfaces as a result of relative displacement engage selectively with a mating surface of the other stem part. The desired change in effective length of the valve stem is achieved by the bearing surfaces and the mating surface working together.

Bearing surfaces and mating surfaces are arranged in particular on the end faces of the two stem parts. Such stem parts can be manufactured with relatively small dimensions.

The two stem parts are preferably rotatable relative to one another. This also assists the manufacture of an adapter with very small dimensions which is housed completely within the top part.

In a preferred embodiment, the bearing surfaces are formed by at least two, preferably four, sectors of a circle. The desired change in the effective length of the valve stem is achieved by a relative rotation through 180° or 90°.

Alternatively, the bearing surfaces are formed by raised parts and/or recesses in a flat surface.

The bearing surfaces are especially advantageously arranged symmetrically about a point of symmetry. As a result, the bearing forces are transferred symmetrically and no undesirable tilting moments occur.

It is also favourable for one stem part to have an extension in the form of a sleeve, and for the other stem part to be a cylinder arranged in the sleeve. The cylinder is guided in the sleeve. Both parts take up only a little space.

In particular, the stem parts can be secured against falling out. This security measure provides a one hundred percent guarantee that the adapter will not become lost.

For one stem part this can be achieved in that the sleeve carries externally at least one cam which engages in an axial guide (groove or slot) at the base of the top part, the axial guide being bounded at least at one end.

For the other stem part, it is advisable for the cylinder to carry externally at least one cam which engages in an axial slot in the sleeve, the axial slot being bounded at least at one end.

Furthermore, it is an advantage for the axial guide or the axial slot to be bounded at one end by a projection which is resiliently displaceable by a sloping surface on the cam. Such a device can be easily assembled and then holds all parts securely in place.

In further development of the invention, the end positions of the relative rotary movement can be fixed by catches and/or stop members. Setting of the desired adapter position is therefore simple and foolproof. In addition, an audible engagement can be achieved.

In this connection it is advisable for the sleeve to have two axial slots offset in the circumferential direction, in which a cam on the cylinder engages selectively, and for the sleeve portion between the axial slots to be resiliently displaceable by the cam. The cam therefore snaps into one of the two axial slots and is securely locked there.

In a preferred embodiment, provision is made for one stem part to be secured in the top part against rotation and for the other stem part to be provided with an engagement face for the application of a torque. In this manner the adapter can easily be adjusted.

Structurally, this is achieved in particular in that the sleeve is secured against rotation and the cylinder is provided at its free end face with a transverse slot for engagement by a tool, such as a screwdriver. The entire diameter of the free end face is available for placement of the tool. Even small adapters can be easily adjusted using this method.

The stem parts advantageously carry a marking for denoting their relative position. Such a marking can be constituted by an arrow on one stem part and a position marker on the other stem part.

The invention is explained in detail hereinafter with reference to preferred embodiments illustrated in the drawings, in which
- Fig. 1: is a side view, partly in section, of a thermostatic radiator valve equipped according to the invention,
- Fig. 2: is a side view of an outer stem part,
- Fig. 3: is a longitudinal section through the outer stem part,
- Fig. 4: is a view from below of the outer stem part,
- Fig. 5: is a section along the line A-A of Fig. 3,
- Fig. 6: is a side view, partly in section, through the inner stem part,
- Fig. 7: is a view from above onto the inner stem part,
- Fig. 8: is a section along the line B-B of Fig. 6,
- Fig. 9: is a view from below onto the inner stem part,
- Fig. 10: shows diagrammatically the co-operation of the bearing and mating surfaces,
- Fig. 11: is a three-dimensional sectional view of the outer stem part,
- Fig. 12: is a three-dimensional view of the inner stem part,
- Fig. 13: is a modification of the outer stem part, and
- Fig. 14: is a further modification of the outer stem part.

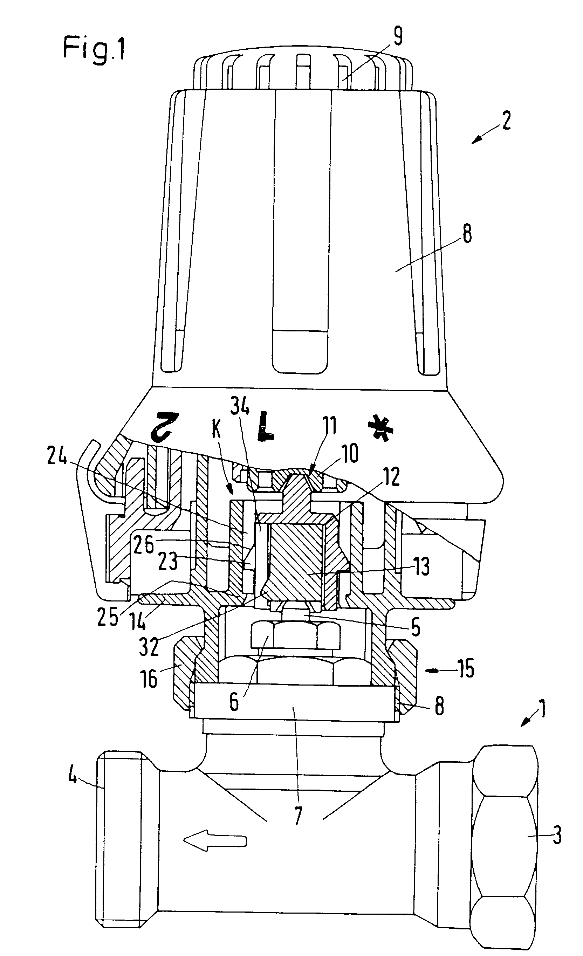

The embodiment illustrated in Figs 1 to 12 is a thermostatic radiator valve, which consists of a valve housing 1 and a thermostat top part 2. As is customary, the valve housing 1 has an inlet connection 3 and an outlet connection 4 between which there is (not illustrated) a valve seat and its associated closure member. The closure member, as is customary, is held in the open position by a restoring spring and is moved into the closed position by pushing in a tappet 5 which passes to the outside through a stuffing box 6. The stuffing box is surrounded by a connector 7 which has an external thread 8.

The thermostat top part 2 comprises a rotary knob 8, which carries inside it a working element 9 filled with expandable material. In this particular case, the working element is filled with a paste-like expandable material which, when it expands in dependence on temperature, displaces the first portion 10 of a valve stem 11 axially; the valve stem also consists of an outer stem part 12 and a inner stem part 13 which together form an adapter K. The rotary knob 8 can be rotated on a base 14 to adjust the set-point. The rotary movement leads to axial displacement of the valve stem 11. The base 14 is fixed to the valve housing 1 by a fixing means 15, here in the form of a union nut 16 that is screwed onto the external thread 8; the end face of the base 14 is pressed against the end face of the connector 7. The inner stem part 13 then acts on the tappet 5.

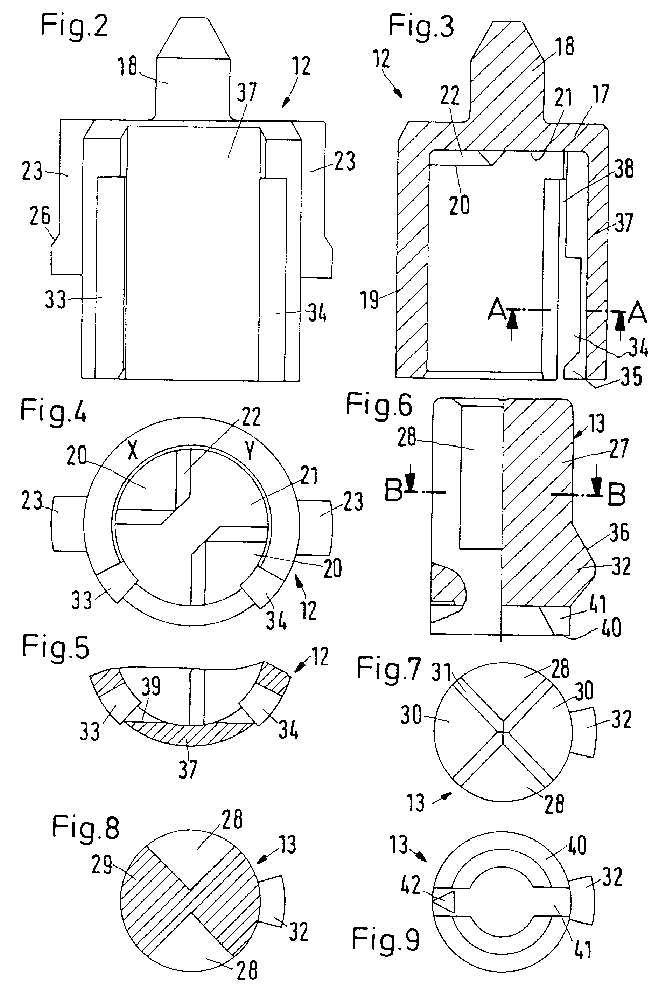

As Figs 2 to 5 show in detail, the outer stem part 12 has an end wall 17 which on one side carries a pin 18, which engages with the first portion of the valve stem 11, and on the other side a sleeve 19 and also axially offset bearing surfaces 20 and 21 in the form of quadrants with ramps 22 lying between them. The outside of the sleeve 19 is provided with two cams 23 which engage in axial guides 24 of the base 14. The axial guide is bounded at its lower end by a projection 25. The projection can be displaced by a sloping surface 26 on the cam so that the outer stem part 12 is held captively in the base 14 once the cams 23 have been inserted in the axial guides 24.

As Figs. 6-10 show, the inner stem part 13 is formed by a cylinder 27, which has two slots 28, so that in section along the line B-B the hatched cross-section 29 shown in Fig 8 is what remains. At the end face there are two mating surfaces 30 in the form of quadrants with ramps 31 arranged leading up to them. On the outside there is a cam 32 which engages in one of two axial slots 33, 34 of the sleeve 19. These axial slots too are bounded by a respective projection 35, which is displaced by a sloping surface 36 on the cam 32 as this is introduced into the axial slot 34, but then prevents the inner stem part 13 from falling out of the outer stem part 12. The sleeve portion 37 between the two axial slots 33 and 34 is resiliently deformable by virtue of its smaller wall thickness and the extension 38 of the axial slot 34. By applying a torque, the cylinder 27 can therefore be turned from one locked position, which is determined by engagement of the cam 32 in the axial slot 33, into a second locked position, which is determined by engagement of the cam 32 in the axial slot 34. Sloping surfaces 39 adjoining the axial grooves 33, 34 can assist in this. For applying the torque, on the free end face 40 of the cylinder 27 there is a transverse slot 41 into which the blade of a screwdriver or other tool can be inserted.

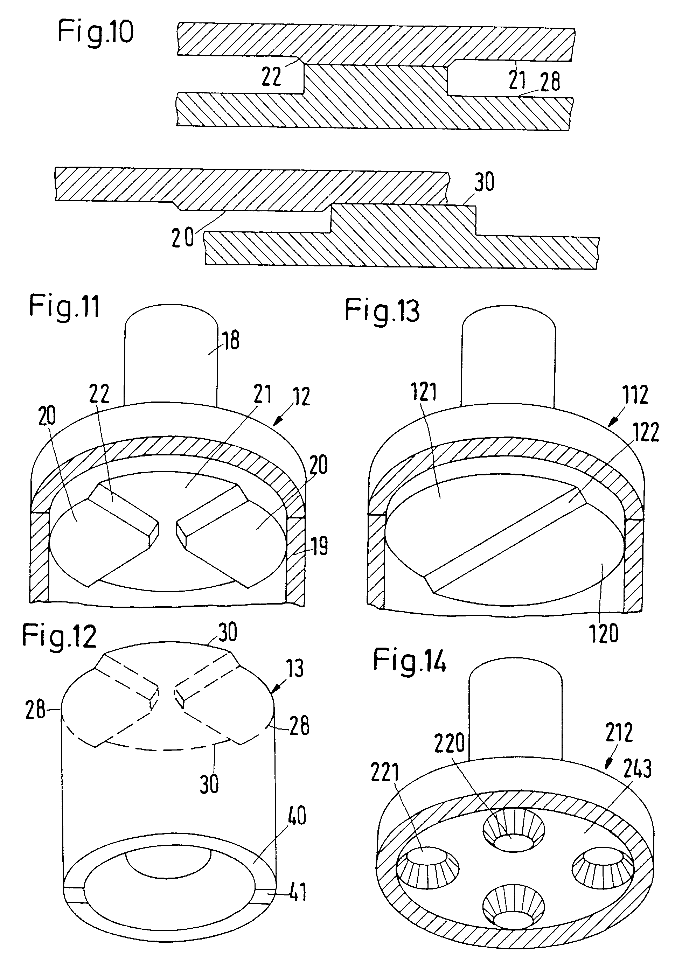

Figs 11 and 12 show diagrammatically the bearing surfaces 20, 21 and the mating surface 30 on the two stem parts 12 and 13. As illustrated diagrammatically in Fig. 10, in one rotated position the bearing surface 20 engages with the mating surface 30 of the inner stem part 13 (upper part of the Figure), and in the other rotated position the bearing surface 21 engages with the mating surface 30 (lower part of the Figure). The overall axial length of the two stem parts 12 and 13 is consequently changed. At the transition from one to the other rotated position, the effective length of the valve stem 11 reduces by the axial distance between the bearing surfaces 20 and 21. This distance can be very accurately dimensioned so that as the top part 2 is positioned on a different valve housing 1, which in turn has an external thread 7 for fixing the top part, the length adaptation is effected such that the set-point calibration of the top part 2 carried out at the factory also applies to the second type of valve housing.

A marking denoting the rotated position is provided by an arrow 42 on the inner stem part 13 and markings X and Y (for example, an abbreviation for the types of valve housing to be used) at the free end face of the outer stem part 12.

In the embodiment shown in Fig. 13, the outer stem part 112 has two bearing surfaces 120 and 121 which are joined to one another by means of a ramp 122 and here have the form of a semicircular sector. The mating surface on the inner stem part can be matched to this shape of bearing surface.

The outer stem part 212 of Fig. 14 has in a surface 243 truncated conical depressions 221 acting as bearing surfaces. The end face of the inner stem part can be correspondingly constructed. This provides three effective lengths of the valve stem.

The adapter K comprising the stem parts 12 and 13 is received completely inside the top part 2 and is secured against falling out. The dimensions are extremely small; for example, the sleeve 19 is 12 mm long and has an external diameter of 8 mm.

The embodiments illustrated can be modified in many respects without departing from the basic concept of the invention. For example, the bearing and mating surfaces could also be provided on the circumference of the two stem parts 12 and 13 and comprise a pin and an inclined circumferential groove. Instead of a union nut 16 as the fixing means, conventional clamping means could be used, which, for example, draw resilient feet of the base radially inwards by means of a clamping band, or any other known fixing method, provided that the fixing means of the top part are suitable for mounting directly on two different types of valve housing.

## Claims

1. A thermostat top part (2) for radiator valves, which by means of an adapter (K) can be used for at least two types of valve housing, having a fixing means (15) for mounting it on the valve housing (1) and a valve stem (11) that is axially adjustable by a temperature-dependent working element (9) for displacing a tappet (5) in the valve housing loaded by a restoring spring, characterized in that the fixing means (15) is constructed for direct mounting of the top part (2) on the different types of valve housing, of which there are at least two, and the adapter (K) is formed by two stem parts (12, 13) which are displaceable relative to one another and as a result alter the effective length of the valve stem (11).

2. A thermostat top part according to claim 1, characterized in that the change in length predetermined by adjustment of the stem parts (12, 13) is rated so that the set-point calibration of the top part (2) applies to both types of valve housing.

3. A thermostat top part according to claim 1 or 2, characterized in that one stem part (12; 112; 212) has axially offset bearing surfaces (20, 21, 120, 121; 220, 221) joined to one another by way of a ramp (22; 122), which surfaces as a result of relative displacement engage selectively with a mating surface (30) of the other stem part (13).

4. A thermostat top part according to claim 3, characterized in that bearing surfaces and mating surfaces (20, 21, 30; 120, 121; 220, 221) are arranged in particular on the end faces of the two stem parts (12, 13; 112, 212).

5. A thermostat top part according to one of claims 1 to 4, characterized in that the two stem parts (12, 13) are rotatable relative to one another.

6. A thermostat top part according to claim 4 and 5, characterized in that the bearing surfaces (20, 21; 12, 121) are formed by at least two sectors of a circle.

7. A thermostat top part according to claim 4 and 5, characterized in that the bearing surfaces are formed by raised parts (220) and/or recesses (221) in a flat surface (242).

8. A thermostat top part according to one of claims 3 to 7, characterized in that the bearing surfaces (20, 21; 120, 121; 220, 221) are arranged symmetrically about a point of symmetry.

9. A thermostat top part according to one of claims 1 to 8, characterized in that one stem part (12) has an extension in the form of a sleeve (19), and the other stem part (13) is a cylinder (27) arranged in the sleeve.

10. A thermostat top part according to one of claims 1 to 9, characterized in that the stem parts (12, 13) are secured against falling out.

11. A thermostat top part according to claim 9 and 10, characterized in that the sleeve (19) carries externally at least one cam (23) which engages in an axial guide (24) (groove or slot) at the base (14) of the top part (2), the axial guide being bounded at least at one end.

12. A thermostat top part according to one of claims 9 to 11, characterized in that the cylinder (27) carries externally at least one cam (32) which engages in an axial slot (33, 24) in the sleeve (19), the axial slot being bounded at least at one end.

13. A thermostat top part according to claim 11 or 12, characterized in that the axial guide (24) or the axial slot (33, 34) is bounded at one end by a projection (25, 35) which is resiliently displaceable by a sloping surface (26, 36) on the cam (23, 32).

14. A thermostat top part according to one of claims 5 to 13, characterized in that the end positions of the relative rotary movement are fixed by catches and/or stop members.

15. A thermostat top part according to one of claims 9 to 14, characterized in that the sleeve (19) has two axial slots (33, 34) offset in the circumferential direction, in which a cam (32) on the cylinder (27) engages selectively, and the sleeve portion between the axial slots is resiliently displaceable by the cam (32).

16. A thermostat top part according to one of claims 5 to 15, characterized in that one stem part (12) is secured in the top part (2) against rotation and the other stem part (13) is provided with an engagement face (41) for the application of a torque.

17. A thermostat top part according to one of claims 9 to 16, characterized in that the sleeve (19) is secured against rotation and the cylinder (27) is provided at its free end face with a transverse slot (41) for engagement by a tool, such as a screwdriver.

18. A thermostat top part according to one of claims 1 to 17, characterized in that the stem parts (12, 13) carry a marking (42, X, Y) for denoting their relative position.

## Patentansprüche

1. Thermostataufsatz (2) für Heizkörperventile, der mit Hilfe eines Adapters (K) für mindestens zwei Ventilgehäusetypen verwendbar ist, mit einer Befestigungsvorrichtung (15) zum Anbringen am Ventilgehäuse (4) und einer von einem temperaturabhängigen Arbeitselement (9) axial verstellbaren Ventilstange (11) zum Verlagern eines durch eine Rückstellfeder belasteten Stößels (15) im Ventilgehäuse, dadurch gekennzeichnet, daß die Befestigungsvorrichtung (15) zum direkten Anbringen des Aufsatzes (2) an den wenigstens zwei Ventilgehäusetypen ausgebildet ist und daß der Adapter (K) durch zwei gegeneinander verstellbare und hierdurch die wirksame Länge der Ventilstange (11) verändernde Stangenteile (12, 13) gebildet ist.

2. Thermostataufsatz nach Anspruch 1, dadurch gekennzeichnet, daß die durch Verstellung der Stangenteile (12, 13) vorgegebene Längenänderung so bemessen ist, daß die Sollwert-Justierung des Aufsatzes (2) für beide Ventilgehäusetypen gilt.

3. Thermostataufsatz nach Anspruch 1 oder 2, dadurch gekennzeichnet, daß der eine Stangenteil (12; 112; 212) axial versetzte und über eine Rampe (22; 122) miteinander verbundene Stützflächen (20, 21; 120, 121; 220, 221) aufweist, die durch relative Verstellung wahlweise an einer Gegenfläche (30) des anderen Stangenteils (13) zur Anlage kommen.

4. Thermostataufsatz nach Anspruch 3, dadurch gekennzeichnet, daß Stütz- und Gegenflächen (20, 21, 30; 120, 121; 220, 221) an den Stirnseiten der beiden Stangenteile (12, 13; 112, 212) angeordnet sind.

5. Thermostataufsatz nach einem der Ansprüche 1 bis 4, dadurch gekennzeichnet, daß die beiden Stangenteile (12, 13) relativ zueinander verdrehbar sind.

6. Thermostataufsatz nach Anspruch 4 und 5, dadurch gekennzeichnet, daß die Stützflächen (20, 21; 120, 121) durch mindestens zwei Kreissektoren gebildet sind.

7. Thermostataufsatz nach Anspruch 4 und 5, dadurch gekennzeichnet, daß die Stützflächen durch Erhebungen (220) und/oder Vertiefungen (221) in einer ebenen Fläche (242) gebildet sind.

8. Thermostataufsatz nach einem der Ansprüche 3 bis 7, dadurch gekennzeichnet, daß die Stützflächen (20, 21; 120, 121; 220, 221) punktsymmetrisch angeordnet sind.

9. Thermostataufsatz nach einem der Ansprüche 1 bis 8, dadurch gekennzeichnet, daß der eine Stangenteil (12) einen Fortsatz in der Form einer Hülse (19) hat und der andere Stangenteil (13) ein in der Hülse angeordneter Zylinder (27) ist.

10. Thermostataufsatz nach einem der Ansprüche 1 bis 9, dadurch gekennzeichnet, daß die Stangenteile (12, 13) gegen Herausfallen gesichert sind.

11. Thermostataufsatz nach Anspruch 9 und 10, dadurch gekennzeichnet, daß die Hülse (19) außen mindestens einen Nocken (23) trägt, der in eine zumindest an einem Ende begrenzte Axialführung (24) (Nut oder Schlitz) am Sockel (14) des Aufsatzes (2) greift.

12. Thermostataufsatz nach einem der Ansprüche 9 bis 11, dadurch gekennzeichnet, daß der Zylinder (27) außen mindestens einen Nocken (32) trägt, der in einen zumindest an einem Ende begrenzten Axialschlitz (33, 24) in der Hülse (19) greift.

13. Thermostataufsatz nach Anspruch 11 oder 12 , dadurch gekennzeichnet, daß die Axialführung (24) bzw. der Axialschlitz (33, 34) an einem Ende durch eine Nase (25, 35) begrenzt ist, die durch eine Schrägfläche (26, 36) am Nocken (23, 32) elastisch verdrängbar ist.

14. Thermostataufsatz nach einem der Ansprüche 5 bis 13, dadurch gekennzeichnet, daß die Endstellungen der relativen Drehbewegung durch Rasten und/oder Anschläge festgelegt sind.

15. Thermostataufsatz nach einem der Ansprüche 9 bis 14, dadurch gekennzeichnet, daß die Hülse (19) zwei in Umfangsrichtung versetzte Axialschlitze (33, 34) aufweist, in die ein Nocken (32) am Zylinder (27) wahlweise eingreift, und daß der Hülsenabschnitt zwischen den Axialschlitzen durch den Nocken (32) elastisch verdrängbar ist.

16. Thermostataufsatz nach einem der Ansprüche 5 bis 15, dadurch gekennzeichnet, daß der eine Stangenteil (12) gegen Drehung im Aufsatz (2) gesichert und der andere Stangenteil (13) mit einer Angriffsfläche (41) zum Aufbringen eines Drehmoments versehen ist.

17. Thermostataufsatz nach einem der Ansprüche 9 bis 16, dadurch gekennzeichnet, daß die Hülse (19) gegen Drehung gesichert und der Zylinder (27) an der freien Stirnseite mit einer Quernut (41) zum Angriff eines Werkzeugs, wie Schraubendreher, versehen ist.

18. Thermostataufsatz nach einem der Ansprüche 1 bis 17, dadurch gekennzeichnet, daß die Stangenteile (12, 13) eine Markierung (42, X, Y) zur Kennzeichnung der relativen Stellung tragen.

## Revendications

1. Une partie supérieure de thermostat (2) pour vannes de radiateur qui, au moyen d'un adaptateur (K), peut être utilisée pour au moins deux types de boîtier de vanne ayant un moyen de fixation (45) pour la monter sur le boîtier de vanne (1) et une tige de vanne (11) qui est réglable axialement par un élément de travail dépendant de la température (9) pour déplacer un poussoir (5) dans le boîtier de vanne chargé par un ressort de rappel, caractérisée en ce que le moyen de fixation (15) est réalisé pour un montage direct de la partie supérieure (2) sur les différents types de boîtier de vanne dont deux au moins sont prévus et l'adaptateur (K) est formé par deux parties de tige (12, 13) qui sont aptes à être déplacées l'une par rapport à l'autre et comme résultat modifient la longueur efficace de la tige de vanne (11).

2. Une partie supérieure de thermostat selon la revendication 1, caractérisée en ce que la modification de longueur prédéterminée par le réglage des parties de tige (12, 13) est estimée afin que l'étalonnage du point de réglage de la partie supérieure (2) s'applique aux deux types de boîtier de vanne.

3. Une partie supérieure de thermostat selon la revendication 1 ou 2, caractérisée en ce qu'une partie de tige (12, 112, 212) présente des surfaces de support axialement décalées (20, 21, 120, 121, 220, 221) réunies les unes aux autres au moyen d'une rampe (22, 122), lesquelles surfaces comme résultat d'un déplacement relatif viennent en prise sélectivement avec une surface d'adaptation (30) de l'autre partie de tige (13).

4. Une partie supérieure de thermostat selon la revendication 3, caractérisée en ce que les surfaces de support et les surfaces d'adaptation (20, 21, 30, 120, 121, 220, 221) sont agencées en particulier sur les faces d'extrémité des deux parties de tige (12, 13, 112, 212).

5. Une partie supérieure de thermostat selon l'une des revendications 1 à 4, caractérisée en ce que les deux parties de tige (12, 13) sont aptes à tourner l'une par rapport à l'autre.

6. Une partie supérieure de thermostat selon la revendication 4 ou 5, caractérisée en ce que les surfaces de support (20, 21, 12, 121) sont formées par au moins deux secteurs d'un cercle.

7. Une partie supérieure de thermostat selon la revendication 4 ou 5, caractérisée en ce que les surfaces de support sont formées par des parties relevées (220) et/ou des évidements (221) dans une surface plane (242).

8. Une partie supérieure de thermostat selon l'une des revendications 3 à 7, caractérisée en ce que les surfaces de support (20, 21, 120, 121, 220, 221) sont disposées symétriquement autour d'un point de symétrie.

9. Une partie supérieure de thermostat selon l'une des revendications 1 à 8, caractérisée en ce qu'une partie de tige (12) présente un prolongement sous la forme d'un manchon (19) et l'autre partie de tige (13) est un cylindre (27) agencé dans le manchon.

10. Une partie supérieure de thermostat selon l'une des revendications 1 à 9, caractérisée en ce que les parties de tige (12, 13) sont fixées vis-à-vis d'une chute.

11. Une partie supérieure de thermostat selon la revendication 9 ou 10, caractérisée en ce que le manchon (19) porte extérieurement au moins une came (23) qui vient en prise dans un guide axial (24) (rainure ou fente) à la base (14) de la partie supérieure (2), le guide axial étant délimité au moins à une extrémité.

12. Une partie supérieure de thermostat selon l'une des revendications 9 à 11, caractérisée en ce que le cylindre (27) porte extérieurement au moins une came (32) qui vient en prise dans une fente axiale (33, 24) dans le manchon (19), la fente axiale étant reliée à au moins une extrémité.

13. Une partie supérieure de thermostat selon la revendication 11 ou 12, caractérisée en ce que le guide axial (24) ou la fente axiale (33, 34) est relié à une extrémité par un prolongement (25, 35) qui est élastiquement apte à être déplacé par une surface inclinée (26, 36) sur la came (23, 32).

14. Une partie supérieure de thermostat selon l'une des revendications 5 à 13, caractérisée en ce que les positions d'extrémité du mouvement rotatif relatif sont fixées par des cliquets et/ou des éléments d'arrêt.

15. Une partie supérieure de thermostat selon l'une des revendications 9 à 14, caractérisée en ce que le manchon (19) présente deux fentes axiales (33, 34) décalées dans la direction circonférentielle où une came (32) sur le cylindre (27) vient en prise sélectivement, et la partie de manchon entre les fentes axiales est apte à être déplacée élastiquement par la came (32).

16. Une partie supérieure de thermostat selon l'une des revendications 5 à 15, caractérisée en ce qu'une partie de tige (12) est fixée dans la partie supérieure (2) vis-à-vis de la rotation et l'autre partie de tige (13) est prévue avec une face de mise en prise (41) pour l'application d'un couple.

17. Une partie supérieure de thermostat selon l'une des revendications 9 à 16, caractérisée en ce que le manchon (19) est fixé vis-à-vis de la rotation et le cylindre (27) est prévu à sa face d'extrémité libre avec une fente transversale (41) pour la mise en prise par un outil comme un tournevis.

18. Une partie supérieure de thermostat selon l'une des revendications 1 à 17, caractérisée en ce que les parties de tige (12, 13) portent un repère (42, X, Y) pour désigner leur position relative.
